Europäisches Patentamt

(19) European Patent Office

Office européen des brevets

(11) Publication number: **0 353 062**
**A2**

(12) **EUROPEAN PATENT APPLICATION**

(21) Application number: **89307642.2**

(22) Date of filing: **27.07.89**

(51) Int. Cl.⁵: **C 04 B 7/32**
C 04 B 28/06
//(C04B14/38,16:06)

(30) Priority: **29.07.88 GB 8818113**

(43) Date of publication of application:
**31.01.90 Bulletin 90/05**

(84) Designated Contracting States:
**AT BE CH DE ES FR GB GR IT LI LU NL SE**

(71) Applicant: **BLUE CIRCLE INDUSTRIES PLC**
**Portland House**
**Aldermaston Berkshire RG7 4HP (GB)**

(72) Inventor: **Gartshore, Gavin Cramond**
**Braeside Platt Common St. Mary's Platt**
**Sevenoaks Kent TN15 8JX (GB)**

(74) Representative: **Fisher, Adrian John et al**
**CARPMAELS & RANSFORD 43 Bloomsbury Square**
**London WC1A 2RA (GB)**

(54) **Reinforced cement compositions.**

(57) A settable cementitious composition is prepared by mixing a ground mineral clinker that contains the phase $4CaO.3Al_2O_3.SO_3$ with a source of $SO_3$ (eg. calcium sulfate), a source of CaO (eg. lime and/or ordinary Portland cement) and a fibrous material, in the presence of water. The fibrous material, which is preferably selected from synthetic organic fibres, wollastonite fibres and mixtures thereof, gives rise to improvements in the strength characteristics of the hardened masses formed by the setting of the compositions. The compositions find use in the production of monolithic packs to be used as supports in underground mining operations and also in the production of ceiling tiles and similar constructional articles.

Bundesdruckerei Berlin

EP 0 353 062 A2

## Description

## REINFORCED CEMENTITIOUS COMPOSITIONS

Field of the invention

The present invention relates to settable cementitious compositions that contain fibres and to hardened masses, especially in the form of monolithic packs for use as supports in underground mining or in the form of shaped articles, produced by the setting of such compositions.

Background to the invention

It has previously been proposed to reinforce concrete based on ordinary Portland cement (OPC) by incorporating glass fibres into the matrix. Such fibres are believed to inhibit the sudden growth of cracks that can be generated from flaws that are usually present in such a brittle matrix and which could give rise to catastrophic failure of the unreinforced material.

It has also been recently proposed to add wollastonite (a naturally occuring calcium metasilicate having acicular crystals) to glass-reinforced OPC compositions in order further to inhibit or delay the propagation of micro-cracks and thereby allow the glass fibres to function with greater efficiency (Product Information Sheet No. 2, dated September 1987, relating to the product "Snowfort" and issued by Messrs. Calcrete Ltd).

Glass fibres are, of course, apt to deteriorate in the alkaline environment of an OPC matrix. Even the so-called alkali-resistant glass fibres are not completely proof against attack by alkali in OPC and the strength of glass-fibre reinforced OPC can fall by as much as 50% over a period of time.

Summary of the invention

The present invention provides a settable cementitious composition comprising a ground mineral clinker containing the phase $4CaO.3Al_2O_3.SO_3$, water, a source of $SO_3$, a source of CaO, and at least one fibrous material.

The present invention also provides a method of producing such a settable cementitious composition wherein the ground mineral clinker is mixed with the source of $SO_3$, the source of CaO and the fibrous material in the presence of water. This method may be effected, for example, by mixing a first slurry containing at least the ground mineral clinker with a second slurry containing at least the source of $SO_3$ and the source CaO, this variant being particularly suitable for the production of monolithic packs in underground mines by the pump packing process.

The present invention also provides a hardened mass formed by the setting of a cementitious composition according to this invention, and dry mixtures from which the cementitious compositions may be produced by the admixture of water.

Description of preferred embodiments

The mineral clinker compositions to be used in the present invention may be described as "sulfoaluminous". The mineral phase $4CaO.3Al_2O_3.SO_3$ is known as Klein's compound and may also be represented by $3CaO.3Al_2O_3.CaSO_4$ or $C_4A_3s$. Clinkers containing Klein's compound, their production and their use as expansive agents in Portland cement compositions are known; see United States Patents No. 3,155,526 (Klein), No. 3,251,701 (Klein), No. 3,857,714 (Mehta) and No. 4,419,136 (Rice).

However, the preferred clinkers for use in this present invention are those containing at least 15% by weight of $C_4A_3s$, 0 to 1% by weight of free lime, 0 to 25% by weight of $CaO.2Al_2O_3(CA_2)$, 0 to 10% by weight of $12CaO.7Al_2O_3(C_{12}A_7)$, 0 to 5% by weight of $CaO.TiO_2(CT)$, 0 to 10% by weight of ferrite phase (of the approximate composition $4CaO.Al_2O_3.Fe_2O_3$ or $C_4AF$), 0 to 60% by weight of $CaO.Al_2O_3(CA)$, and 0 to 4.1% by weight of a $CaSO_4$ phase. In principle silica, $SiO_2$, could be absent from the mineral clinker but in practice some will usually be present due to impurities in the raw materials from which the clinker is manufactured. Any $SiO_2$ in the clinker composition should be preferably present substantially as the phase $2CaO.Al_2O_3.SiO_2$ ($C_2AS$). Preferably, the clinker composition contains less than 10% by weight of $SiO_2$ (corresponding to a content of less than 45.6% by weight of $C_2AS$), more preferably less than 5% by weight of $SiO_2$.

Preferred clinker compositions contain at least 25%, but usually not more than 85%, by weight of $C_4A_3s$. The particularly preferred amounts of that phase are in the range from 35 to 68% by weight of the clinker composition.

It is also preferred that the mineral clinker composition should contain less than 20% by weight of CA; less than 0.2% of free lime; less than 5% by weight of $C_{12}A_7$ and less than 1% by weight of $CaSO_4$. Ideally, the content of these components should be negligible. It is also preferred that in the clinker composition the content of $CA_2$ should be less than 5% by weight and the content of $C_4AF$ should be not over 5% weight.

It will be understood, of course, that the mineral clinker composition may also contain a small amount of other components, eg. $Mn_2O_3$, $P_2O_5$, MgO, $K_2O$, $Na_2O$ and loss on ignition.

Preferably, the sulfoaluminous clinker should be ground to a fineness such that settling of the resultant particles does not occur when an aqueous suspension thereof is held for long periods. Preferably, the particle size distribution is such that at least 95%, especially at least 98%, by weight of the material has a particle size of less than 45 microns.

The amount of the ground mineral clinker in the settable compositions of this invention is preferably from 1 to 60% by weight of total solids.

A preferred source of $SO_3$ for inclusion in the compositions of the present invention is calcium sulfate and it is preferred that at least 50% by weight of the calcium sulfate should be in the form of anhydrite.

Preferably, the calcium sulfate is ground to a particle size of less than 250 microns. Usually, the amount of $SO_3$ in the composition will be from 2 to 50% by weight of total solids.

A preferred source of CaO for inclusion in the present compositions is calcium hydroxide, $Ca(OH)_2$. This will normally be added in the form of slaked or hydrated lime, although in principle it would be possible to form it in situ by the addition of calcium oxide to the aqueous composition.

In certain embodiments, ordinary Portland cement clinker may be used as a source of CaO, in addition to or instead of hydrated lime. Ordinary Portland cement commonly comprises calcium sulfate and, therefore, may also be used as a source thereof in the present compositions.

In general, the amount of CaO in the present compositions will be at least 2% by weight of total solids. Certain preferred settable compositions of this invention contain up to 70% of OPC and/or up to 25% of hydrated lime, by weight of total solids.

In the absence of lime and calcium sulfate, $C_4A_3S$ has been shown to be only very weakly hydraulic. However, in the presence of lime and calcium sulfate the $C_4A_3S$ reacts rapidly and expansively to form ettringite. Thus, the lime and calcium sulfate may be regarded as activators for the hydration reaction of $C_4A_3S$.

The settable composition of the present invention may also contain a clay and it is particularly preferred that this should be bentonite. By increasing the proportion of bentonite in the composition it is possible advantageously to reduce the density of the final set composition. The content of clay, especially bentonite, in the present compositions is preferably 0 to 10%, more preferably from 2 to 9% and especially from 3 to 9%, by weight of total solids. In those embodiments wherein the settable cementitious composition is formed by the admixture of a first slurry containing the mineral clinker composition with a second slurry containing the source(s) of $SO_3$ and CaO, it is preferred that the clay should be included in the second slurry.

Other optional, but preferred, components of the present compositions may be selected from setting and/or hardening accelerators, eg. alkali metal carbonates, such as lithium carbonate; alkali metal sulfates (to promote the formation of ettringite); retarders, eg. citric acid; gelling agents; and foaming agents.

Certain preferred compositions of the invention contain up to 10% of set-regulating agent, eg. up to 5% of lithium carbonate and/or up to 5% of sodium carbonate, the percentages being by weight of total solids.

The preferred sulfoaluminous mineral clinker composition, a method for its production and its use, with certain of the above-described non-fibrous components, in settable cementitious compositions are described in European patent specification No. 0,181,739A, the teaching in which is incorporated herein by reference.

The sulfoaluminous mineral clinker is available commercially in a ground form from Messrs. Blue Circle Industries Plc under the trade name "Packset". The Packset composition may be slurried with an activator composition, "Packbent" for use in the "Hydropack" system for the production of monolithic packs as supports in underground mines. The sulfoaluminous clinkers are also used in conjunction with a Portland cement clinker (by intergrinding them, or by grinding them separately and then interblending), and with anhydrite if appropriate, in the production of cements that exhibit rapid strength development and which are expansive or shrinkage-compensating. Such cements are marketed by Messrs. Blue Circle Industries Plc under the trade name "Calumex". The Hydropack system and the Calumex cements have been discussed in the paper "Special Hydraulic Compositions for Use in Coal Mining" presented by P.A. Longman, G.R. Long, G.C. Gartshore and D. Watson at the China Coal Conference, Beijing, 7-12 May 1987, the teaching in which paper is also incorporated herein by reference.

The present invention can be regarded as a development of the above-described technology, wherein at least one fibrous material is included in the cementitious composition, for the purposes of reinforcement.

Any of the fibres proposed for use in OPC compositions come into consideration for the purposes of the present invention. Such fibres include glass fibres, in particular the alkali-resistant glass-fibres, for example those available under the trade name "Cemfil" from Messrs. Pilkingtons; steel fibres; inorganic fibrous materials, for example wollastonite; natural organic fibres, in particular cellulose fibres; and synthetic organic fibres, for example polyolefins such as polyethylene or polypropylene, acrylics, polyesters, and poly(arylamides), eg. "Kevlar" (trade mark) from Messrs. Du Pont. Although many fibres are substantially circular in cross-section, a number of synthetic organic fibres are available with special, non-circular cross-sections and these may be considered for use in the present invention, as may the fibres that have been given special surface treatments, for example to improve their wettability. In certain applications, fire-resisting fibres may be used. Another possibility is carbon fibres, although these tend to be rather expensive and are difficult to wet and thus to disperse in the aqueous composition.

The content of fibre in the present compositions is preferably from 0.1 to 10%, more preferably from 0.2 to 7.5% and especially from 1 to 5%, by weight of total solids.

The fibres will typically have an average fibre length of 0.1 to 25 mm. Fibre thickness or gauge (ie. fibre diameter in the case of fibres having a circular cross-section) is typically from 1 to 50 microns, eg. from 5 to 40 microns, although larger fibre gauges, eg. of up to 1 or 2 mm, are possible provided that the aspect ratio is at least 3:1. However, the so-called synthetic pulps (which have fibrillated structures) are also regarded as "fibres" for the purposes of the present invention.

The naturally occurring calcium metasilicate wollastonite is also regarded as fibrous herein, since it has an acicular crystalline structure, the particles having a length after processing of 0.1 to 5 mm and a mean aspect ratio of from 10:1 to 20:1. It has been found that the use of wollastonite with another fibrous material, such as glass fibres and, more particularly, synthetic organic fibres, can give rise to a lower deviation in the strength properties imparted by those other fibres. The wollastonite may be used typically in an amount of 3 to 8% by weight of the composition whereas the glass fibres may be used in an amount of 1-2% by weight and the synthetic organic fibres may be used in an amount of 0.15 to 2% by weight, the percentages being relative to the composition on a dry weight basis.

In the settable compositions of this invention, the water-to-solids ratio is generally from 0.12 to 7.0:1, preferably 0.2 to 5.0:1, more preferably 0.35 to 4.5:1, by weight.

Except where stated to the contrary, the water-to-solids ratios and the percentages by weight of total solids herein exclude sand or other aggregate that may be added to the settable cementitious compositions of this invention.

In certain preferred embodiments, the fibres are included in a settable cementitious composition having a high water content, typically 80-95% by volume or 50-85% by weight of the total composition. In these embodiments, it is preferred that the sulfoaluminous clinker should be activated by calcium sulfate and lime and that bentonite should be included in the composition. It is particularly preferred that the activators and the bentonite shall be added, as an aqueous slurry, to an aqueous slurry of the ground mineral clinker and that the fibres should be initially dispersed in the slurry containing the activators and the bentonite. The slurries may be mixed at the point of use, and these embodiments are suitable for the pump packing process in underground mines and also in the production of panels, tiles and like constructional articles, especially ceiling tiles.

In certain other preferred embodiments, the fibres are incorporated into a settable cementitious composition having a comparatively low water content, typically down to 12%, preferably from 14 to 25%, eg. about 20%, by weight of the total composition. In such embodiments, the components may be brought together in any order, directly to form a single slurry. The use of ordinary Portland cement as a source of CaO and of $SO_3$ (with addition of further calcium sulfate if appropriate) is preferred in these embodiments.

The low-water-content embodiments may find use, for example, in the fabrication of floor tiles, in the fabrication of linings for underground tunnels, and also as a replacement for glass-reinforced plastics in the production of mock scenery and buildings in amusement parks and the like.

Glass fibres are likely to prove more durable and effective in the low-water-content, OPC-containing compositions described above than in conventional OPC based compositions. Although OPC contains free CaO and releases $Ca(OH)_2$ on hydration, the lime reacts with the $C_4A_3s$ phase in the sulfoaluminous component to form ettringite, thereby reducing or eliminating the lime that would otherwise be available to attack the glass fibres.

The use of plasticisers is particularly useful in the embodiments having comparatively low water contents.

The compositions, especially those having a high water content, may also include an acrylic polymer emulsion or solution, which serves to thicken the composition and render it capable of shaping by means of extrusion. Suitable acrylic emulsions are available under the trade names "Viscalex" and "Haloflex". The acrylic polymers may also serve to improve the water-resistance of the final set composition.

Alternative thickening agents can be used, for example guar gum or poly(ethylene oxide).

The present compositions, especially those that include OPC, may also have added any of the conventional aggregates, eg. sand or gravel. The OPC can, of course, be wholly or partially replaced by other Portland cement for special applications.

The settable compositions may comprise extenders, for example silica fume, pulverised fly ash and pozzolanic materials. In particular, such extenders may be used to replace up to 80%, preferably up to 20%, by weight of the mineral clinker that contains the $C_4A_3s$ phase. The hydraulic extenders may act, after the initial hydration of the main components, to remove by reaction any remaining free lime.

The use of foaming agents is particularly advantageous, especially in the low-water-content embodiments, for the production of flexible low-density matrixes of good insulating properties and good strength-to-weight ratios, especially where a more durable product is required. Foaming agents that are useful herein include NCB 6 Special Blend from Messrs. Cormix Ltd, CC 6/88 from Messrs. Grace Dearborn Ltd and Dry Foam Concentrate from Messrs. Celcore Inc.

The present invention can give rise to a number of unexpected advantages. Thus, although fibrous reinforcing materials are known to improve the flexural strength of conventional OPC-based materials, they do not improve the compressive strength and, in some instances, may actually reduce it. However, in the compositions of the present invention, especially those having a high water content, a slight improvement in compressive strength has been found. The materials have also been found to deform slowly rather than fail suddenly and catastrophically, particularly those compositions that have been foamed.

This improvement in stress-strain relationships can give rise to better resistance to roof collapse in underground pack constructions. Furthermore, the improvement in these strength properties permit the use of smaller and/or lighter packs which improves the efficiency of transport of materials below ground and offers wider use in retreat mining.

The improvement in strength properties also permits the casting of light-weight thin sections which in turn permits the development of products such as ceiling tiles, mouldings, wall boards, insulation materials and other panels for use in the construction industry. Foamed compositions in particular have resistance to moisture uptake compared with conventional materials used in this area. It has been found that such articles can be cut or drilled and will accept nails and screws without breaking up. This has not proved possible with the ceiling tiles and the like which have been prepared in accordance with the teaching in EP-A-0,181,739.

Thus, the constructional articles prepared according to the present invention show advantages over the known plasterboard panels and known ceiling tile products in terms of workability, strength, durability, lightness and cheapness. The articles according to this present invention have excellent mouldability and excellent replication properties.

It should be mentioned that the incorporation of the fibres into the aqueous slurry of cementitious components can be achieved without impairing the pumpability of the slurry and it has been found that the fibres show little tendency to settle out, even in those embodiments having a high water content. The excellent pumpability and resistance to settling are particularly marked when the fibres are incorporated into a slurry containing bentonite and this obviates the need for organic suspending agents (although such agents, in addition to or in place of the bentonite, is not precluded herein).

It is believed that such absence of settling of fibres has not previously been reported for cement-containing slurries of high water content. Accordingly settable cementitious compositions are also contemplated wherein the $C_4A_3s$-containing mineral clinker is wholly or partially replaced by other cement, especially high alumina cement (HAC).

The invention also permits the production of a rapid-setting fibre-reinforced cement composition, especially one which has a comparatively low content of water and/or which employs OPC as the source of CaO. Such a cement composition can be applied, for example by spraying, onto a surface for rapid or even immediate setting in order to give a strong coating, for example for ceilings or walls. This embodiment is particularly useful to produce tunnel linings to prevent gas seepage in underground mining operations.

The present invention also permits the production of aerated concrete which provides much stronger aerated blocks than could be obtained hitherto or which incorporates more air whilst retaining the same strength as conventional aerated blocks, with consequent improvement in the insulating properties. The production of a rapid-setting aerated concrete is also advantageous.

It has been observed that the hardened masses produced according to this invention show better fire resistance than expected, even when the fibres are not themselves fire resistant. Whilst not wishing to be bound by any theory, the applicants believe that this might be due to the high content of water bound up in the ettringite.

A particularly attractive application lies in the use of a combination of low density and high density embodiments of the invention in laminated structures such that a combination of benefits including good thermal resistance, high strength and durability are obtained.

Examples

The present invention is illustrated in and by the following examples. In these examples, the materials identified as "Packset A", "Packbent A" and "Packbent B" have the following formulations (wherein the figures represent parts by weight).

Packset A

| | |
|---|---|
| $C_4A_3s$ - containing clinker [1] | 99.45 |
| Guar Gum | 0.3 |
| Citric acid | 0.25 |

| Packbent | A | B |
|---|---|---|
| Synthetic anhydrite | 74.1 | 60.76 |
| Bentonite | 7.0 | 23.74 |
| Lithium carbonate | 0.4 | 0.33 |
| Sodium carbonate | 0.5 | 0.41 |
| Hydralime (2) | 18.0 | 14.76 |

Notes:

(1) This clinker was produced in accordance with Example 2 in EP-A-0,181,739.
(2) "Hydralime" (trade mark) is a calcium hydroxide marketed by Messrs. Blue Circle Industries Plc.

Examples 1-6

A number of settable cementitious compositions were prepared by mixing a slurry of Packset A with either Packbent A or Packbent B. In the compositions according to the present invention (Examples 2-6), the fibre was added to the Packbent slurry before mixing with the Packset slurry. The formulations are shown below, the amounts being given in parts by weight. The water-to-solids ratio (by weight) in the settable composition as formed by the mixing of the slurries is given, as are certain properties, as measured, of the set composition.

| Example: | 1 | 2 | 3 | 4 | 5 | 6 |
|---|---|---|---|---|---|---|
| Components | | | | | | |
| Packset A | 50 | 49.5 | 45 | 40 | 43.5 | 46.5 |
| Packbent A | 50 | 49.5 | - | - | - | 46.5 |
| Packbent B | - | - | 54 | 49 | 52.5 | - |
| Acrylic fibre (1) | - | 1 | 1 | 1 | 2 | 2 |
| Acrylic fibre (2) | - | - | - | - | 2 | - |
| Wollastonite | - | - | - | - | - | 5 |
| Acrylic polymer solution 50% | - | - | - | 10 | - | - |
| Water: solids ratio | 2.5 | 2.5 | 4.4 | 2.8[3] | 2.8 | 2.3 |
| Properties | | | | | | |
| Young's modulus (MNm$^{-2}$) | 500 | 400 | - | - | - | - |
| Compressive strength (Nm$^{-2}$) | | | | | | |
| after 7 day cure | 3.2 | 3.5 | - | - | - | - |
| after 24 hr cure | - | - | 1.6 | 3.2 | 3.0 | 6.0 |
| Dry density (g/cm$^3$) | 0.55 | 0.51 | 0.35 | 0.44 | 0.43 | 0.58 |

Notes:

(1) Acrylic fibre of average length 6 mm and average diameter 0.01 mm.
(2) Acrylic fibre of average length 6 mm and average diameter 1 mm.
(3) The water-to-solids ratio was 3.2 when the polymer solution was taken into account.

Example 7

A settable cementitious composition was prepared using the following components (the figures being parts by weight on a dry basis).

| | |
|---|---|
| OPC | 66.06 |
| Packset A | 24.66 |
| Anhydrite | 8.22 |
| Sekril 950[1] | 1.0 |
| Poly(ethylene oxide)[2] | 0.05 |

Notes:

(1) Sekril 950 (trade name) denotes certain proprietary acrylic fibres.
(2) The poly(ethylene oxide) acts both as a suspending agent and as a dispersant for the fibres.

The composition was in the form of a slurry with a water-to-solids ratio of 0.4 by weight. The slurry was mixed with sand in a ratio 1:1 on a dry basis, to give an aggregate-containing settable cementitious composition with a water-to-solids ratio of 0.2 by weight.

Test samples of the composition were allowed to set and were tested for various strength properties, the results of which are given in the following table.

6

| Age | Hours | | | | Days | | |
|---|---|---|---|---|---|---|---|
| | 1 | 3 | 6 | 24 | 3 | 7 | 28 |
| Compressive | | | | | | | |
| 1" cubes N/mm$^2$ | 8.3 | 12.6 | 14.5 | 27.4 | 38.3 | 42.2 | 46.5 |
| 50mm cubes N/mm$^2$ | 7.7 | 11.0 | 14.3 | 26.6 | 35.4 | 40.2 | 44.3 |
| Tensile Test | | | | | | | |
| MOR N/mm$^2$ | 2.32 | 3.25 | 3.57 | 4.93 | 5.92 | 5.72 | 4.37 |
| MOE GN/m$^2$ | 5.69 | 7.34 | 8.70 | 11.75 | 15.91 | 13.92 | 12.07 |
| LOP Stress N/mm$^2$ | 2.24 | 2.66 | 3.06 | 4.42 | 4.50 | 4.59 | 3.38 |
| LOP Strain % | 0.040 | 0.036 | 0.035 | 0.038 | 0.028 | 0.033 | 0.028 |
| Shrinkage % | | | | | | | 0.0225 |

Setting Time 20°C 65% RH

Initial mins 7

Final mins 10

Notes:

MOR = modulus of rupture

MOE = modulus of elasticity

LOP = limit of proportionality

RH = relative humidity.

Example 8
A mix comprising (in parts by weight):

| | |
|---|---|
| White Portland Cement | 65.4 |
| Packset A | 25.0 |
| Anhydrite | 8.3 |
| Acrylic fibres (6 x 0.01 mm) | 1.0 |
| Citric Acid | 0.3 |

was mixed with water to a water-to-solids ratio of 0.6 by weight, the water containing 0.5% by weight of Dry Foam Concentrate from Messrs. Celcore Inc. The resultant composition set within one hour and exhibited a density of 0.6 g/cm$^3$ after curing for 24 hours. The product could be floated on water for 3 days without any degradation. The product, when tested, exhibited the following compressive strengths: at 24 hours, 1.3 MN/mm$^2$; at 7 days, 7.55 MN/mm$^2$.  The following example illustrates the use of the compositions according to the invention to utilise the lightweight and insulating characteristics of a foamed cementitious material.

Example 9
A mix comprising (in parts by weight) :

| | |
|---|---|
| Water | 100.00 |
| OPC | 66.06 |
| $C_4A_3s$ - containing clinker | 24.66 |
| Anhydrite | 8.22 |
| Sekril 959 | 0.50 |
| Celcore (trade name) foaming agent | 0.05 |
| Citric acid | 0.10 |

was prepared by mixing the foamer powder with 200ml water in a small Voss (trade name) stirrer and then washing the mixture into a Hobart (trade name) mixer until a total of one half the available water was used. The said mixer was operated at speed 3 for 2 minutes. The clinker and remaining solids in powder form were added to the rest of the water and thoroughly mixed by hand prior to placing in the Hobart mixer with the foam. Mixing was effected at speed 3 for 2 minutes. The resultant mixture was then poured into a 60cm by 60cm by 1.5cm mould and levelled off. After demoulding (24h) the resultant tile was allowed to dry naturally before weighing for the density calculation.

The tile was not easily handled because of the tendency to crush on finger pressure.

The foamed composition was then prepared sandwiched between two outer layers consisting of the same composition as used for the foamed composition minus the foaming agent.

Tile a) was constructed as follows:

2mm bottom layer without foaming agent

11mm middle layer prepared with foaming agent as above

2mm top layer without foaming agent.

The tile had a density of 610 kg/m$^3$ and handled easily without breaking.

Tile b) was constructed as follows:

1mm bottom layer without foaming agent

13mm middle layer prepared with foaming agent as above

1mm top layer without foaming agent.

This tile had a density of 480 kg/m$^3$ and likewise handled easily without breaking.

It will, of course be understood that the present invention has been described above purely by way of example, and modifications of detail can be made within the scope of the invention.

**Claims**

1. A settable cementitious composition comprising a ground mineral clinker containing the phase $4CaO.3Al_2O_3.SO_3$, water, a source of $SO_3$, a source of CaO, and at least one fibrous material.

2. A composition according to claim 1 wherein the mineral clinker contains $4CaO.3Al_2O_3.SO_3$ in an amount of from 15 to 68% and $SiO_2$, such $SiO_2$ being present substantially as the phase $2CaO.Al_2O_3.SiO_2$, the balance, if any, of the mineral clinker composition being composed essentially of at least one component selected from the group consisting of not more than 1.0% of free lime, less than 25% of $CaO.2Al_2O_3$, not more than 10% of $12CaO.7Al_2O_3$, less than 5% of $CaO.TiO_2$, less than 10% of ferrite phase, up to 60% of $CaO.Al_2O_3$, and up to 4.1% of a $CaSO_4$ phase, these percentages being by weight of the mineral clinker composition.

3. A composition according to claim 1 or 2, wherein the source of $SO_3$ is calcium sulfate.

4. A composition according to claim 1, 2 or 3, wherein the source of CaO is lime and/or Portland Cement.

5. A composition according to any of claims 1 to 4, which also contains bentonite.

6. A composition according to any of claims 1 to 5, which also contains an acrylic polymer in emulsion or solution.

7. A composition according to any of claims 1 to 6, wherein the fibrous material is selected from synthetic organic fibres, wollastonite fibres and mixtures thereof.

8. A composition according to any of claims 1 to 7, which also contains a foaming agent.

9. A composition according to any of claims 1 to 8, which also contains at least one additive selected from set-accelerators, set-retarders, gelling agents and alkali metal sulfates.

10. A method of producing a settable cementitious composition, wherein a ground mineral clinker containing the phase $4CaO.3Al_2O_3.SO_3$ is mixed in the presence of water with a source of CaO, a source of $SO_3$ and at least one fibrous material.

11. A method according to claim 10, wherein the settable cementitious composition is according to any of claims 2 to 9.

12. A method according to claim 10 or 11, wherein the mineral clinker is formed into a first aqueous slurry which is mixed with a second aqueous slurry containing the source of CaO and the source of $SO_3$.

13. A method according to claim 12, wherein the fibrous material is dispersed in the second aqueous slurry before the latter is mixed with the said first aqueous slurry.

14. A method according to claim 12 or 13, wherein the second aqueous slurry contains bentonite.

15. A hardened mass formed by the setting of a cementitious composition according to any of claims 1 to 9.

16. A laminate comprising at least two layers of a hardened mass according to claim 15, the said two layers differing in density.

17. A dry mixture from which a settable composition according to any of claims 1 to 9 may be prepared by mixing it with water.

18. A two-part pack from which a settable composition may be produced by the method according to claim 12, 13 or 14, the first part comprising components for forming the first slurry upon mixing with water and the second part comprising the components for forming the second slurry upon mixing with water.